# NEUE EUROPÄISCHE PATENTSCHRIFT

(11) **EP 3 135 385 B2**
(45) Veröffentlichungstag und Bekanntmachung des Hinweises auf die Entscheidung über den Einspruch: **09.02.2022**
(45) Hinweis auf die Patenterteilung: 07.03.2018
(21) Anmeldenummer: 15182356.4
(22) Anmeldetag: 25.08.2015
(51) Int. Cl.: B05B 7/24

(54) **DECKEL FÜR EINEN FLÜSSIGKEITSBEHÄLTER FÜR EINE SPRITZPISTOLE**
LID FOR A CONTAINER FOR LIQUIDS FOR A SPRAY GUN
COUVERCLE D'UN RECIPIENT DE LIQUIDE POUR UN PISTOLET PULVERISATEUR

(43) Veröffentlichungstag der Anmeldung: 01.03.2017
(73) Patentinhaber: Massold, Andreas, 72336 Balingen (DE); Sommer, Frank, 72336 Balingen (DE); Zeymer, Markus, 06722 Wetterzeube (DE)
(72) Erfinder: Massold, Andreas, 72336 Balingen (DE); Sommer, Frank, 72336 Balingen (DE); Zeymer, Markus, 06722 Wetterzeube (DE)
(74) Vertreter: Späth, Dieter

(56) Entgegenhaltungen:
- EP-A1- 1 902 786
- EP-B1- 1 366 823
- DE-U1- 29 825 120
- US-A1- 2006 102 550

## Beschreibung

Die Erfindung betrifft einen Deckel für einen Flüssigkeitsbehälter für eine Spritzpistole mit den Merkmalen des Oberbegriffs des Anspruchs 1. Insbesondere ist der Deckel für einen Lackbehälter zum Lackieren mit einer Druckluft- oder sonstigen Spritzpistole vorgesehen.

Die Patentanmeldung US 2006/0 102 550 A1 offenbart einen Flüssigkeitsbehälter für eine Spritzpistole, dessen Deckel einen Anschlussstutzen zum Aufklipsen auf die Spritzpistole aufweist. In dem hohlkegelstumpfförmigen Deckel ist ein kreisscheibenförmiges Filtergewebe angeordnet und durch Ultraschallschweißen, Pressschweißen, Schmelzschweißen oder Kleben befestigt.

Aus dem Patent EP 1 366 823 B1 ist ein becherförmiger Flüssigkeitsbehälter aus Kunststoff mit einem ebenfalls aus Kunststoff bestehenden, aufklipsbaren Deckel bekannt. Der Deckel hat die Form eines flachen Hohlkegelstumpfs mit einem koaxialen und zylinderrohrförmigen Anschlussstutzen, der einstückiger Bestandteil des Deckels ist, zum lösbaren Verbinden mit einer Spritzpistole. Der Anschlussstutzen dient sowohl zu einem mechanischen Verbinden des Deckels einschließlich des eingeklipsten Behälters mit der Spritzpistole als auch der Zuführung von Flüssigkeit aus dem Behälter in die Spritzpistole. In koaxialer Verlängerung des Anschlussstutzens ist ein zylinderrohrförmiges Filter lösbar im Deckel angeordnet. Das Filter weist ein Filtergerüst und einen Ring an einem offenen Stirnende auf, der klemmend von innen in den Anschlussstutzen gesteckt ist. Das Filter ist also klemmend und lösbar durch eine Steckverbindung mit dem Deckel verbunden. Flüssigkeit aus dem Behälter durchströmt das Filter auf dem Weg durch den Anschlussstutzen in die Spritzpistole.

Die internationale Patentanmeldung WO98/32539 A1 offenbart einen Flüssigkeitsbehälter für eine Spritzpistole mit einem scheibenförmigen Deckel, der einen rohrförmigen Anschlussstutzen zum lösbaren Verbinden mit Spritzpistole aufweist. Eine Öffnung des Deckels in dem Anschlussstutzen ist mit einem Filtergewebe versehen, das integraler Bestandteil des Deckels sein kann.

Aufgabe der Erfindung ist eine preiswertere Herstellungsmöglichkeit eines Deckels mit Anschlussstutzen und Filter für einen Flüssigkeitsbehälter für eine Spritzpistole vorzuschlagen.

Gelöst wird diese Aufgabe durch einen Deckel mit den Merkmalen des Anspruchs 1. Der erfindungsgemäße Deckel ist für einen Flüssigkeitsbehälter für eine Spritzpistole vorgesehen. Der Deckel ist aus Kunststoff urgeformt, insbesondere spritzgegossen. Er weist einen rohrförmigen Anschlussstutzen zum lösbaren Verbinden durch beispielsweise Stecken, Klipsen oder Schrauben auf. Vorzugsweise jedoch nicht zwingend weist der Anschlussstutzen einen kreisförmigen Querschnitt auf und ist beispielsweise zylindrisch oder kegelstumpfförmig. Der Deckel weist ein Filter auf, dessen Filtermedium Befestigungsbereiche zum Befestigen am Deckel aufweist, die in urgeformten Kunststoff des Deckels eingebettet sind. Das Filtermedium kann auch außen oder innen beispielsweise an einem Filtergerüst anliegen bzw. dort angeordnet sein. Das ist als "eingebettet" im Sinne der Erfindung zu verstehen. Das Filtermedium ist ein Bestandteil des Filters, der bei Ausströmen von Flüssigkeit aus dem Flüssigkeitsbehälter durch den Anschlussstutzen des Deckels zur Spritzpistole durchströmt wird und dabei Feststoffpartikel zurückhält, d. h. mechanisch von der Flüssigkeit trennt. Das Filtermedium ist beispielsweise ein Vlies, ein Gewebe, Gewirk oder Gestrick. Das Filter, bzw. Filtermedium kann auch ein Sieb sein. Die Aufzählung ist beispielhaft und nicht abschließend. Als Befestigungsbereiche des Filtermediums werden hier die Bereiche bezeichnet, die in den Kunststoff des Deckels eingebettet sind. Ein Befestigungsbereich ist insbesondere ein umlaufender Rand an einem Stirnende des Filtermediums, der dem Deckel bzw. dem Anschlussstutzen zugewandt ist. Weitere Filterbereiche sind beispielsweise in Rippen und dgl. eines Filtergerüsts des Filters eingebettete Bereiche des Filtermediums. Es bildet beispielsweise der Kunststoff des Deckels, in den die Befestigungsbereiche des Filtermediums eingebettet sind, eine Art Matrix für das Filtermedium, wie es beispielsweise von Faserverbundwerkstoffen bekannt ist. Das Einbetten der Befestigungsbereiche des Filtermediums erfolgt beispielsweise bei einem Spritzgießen des Deckels aus Kunststoff, und zwar insbesondere dadurch, dass das Filtermedium in ein Spritzgießwerkzeug für den Deckel eingelegt, das Spritzgießwerkzeug geschlossen und der den Deckel einschließlich beispielsweise eines etwaigen Filtergerüsts für das Filtermedium bildende Kunststoff in das Spritzgießwerkzeug gespritzt wird. Die Befestigung des Filters am Deckel erfolgt dadurch in einem Arbeitsgang mit dem Urformen des Deckels, wodurch sich ein Zusammensetzen, -fügen oder eine sonstige Befestigung des Filters bzw. Filtermediums am Deckel in einem zusätzlichen Arbeitsschritt nach der Herstellung des Deckels erübrigt.

Eine Alternative ist ein Filtermedium, das einstückiger Bestandteil des Deckels und mit diesem gespritzt ist. In diesem Fall besteht das Filtermedium aus demselben Kunststoff wie der Deckel und ist mit dem Deckel urgeformt. Das Filter ist in diesem Fall beispielsweise ein Sieb. Ebenso wie bei einem in ein Filtergerüst des Deckels eingebetteten Filtermedium erfolgt bei einem Urformen des Deckels zusammen mit dem Filter die Befestigung des Filters am Deckel bei der Herstellung in einem Arbeitsgang mit dem Urformen des Deckels, wodurch sich ein Zusammensetzen, -fügen oder eine sonstige Befestigung des Filters bzw. Filtermediums am Deckel in einem zusätzlichen Arbeitsschritt nach der Herstellung des Deckels erübrigt.

Eine Ausgestaltung der Erfindung sieht vor, dass der Deckel ein mit dem Deckel einstückiges Filtergerüst für das Filtermedium aufweist, in das Befestigungsbereiche des Filtermediums eingebettet sind. Das Filtergerüst stützt das Filtermedium und hält es in einer vorgesehenen Form.

Eine Ausgestaltung der Erfindung sieht ein rohrförmiges Filter vor, was auch als schlauchförmig aufgefasst werden kann. Ein Querschnitt ist vorzugsweise allerdings nicht zwingend kreisförmig, es sind an sich beliebige Rohr- oder Schlauchquerschnitte möglich.

Eine Weiterbildung sieht vor, dass sich das rohrförmige Filter von einem offenen Ende weg verjüngt, so dass mehrere Filter wie Hohlkegelstümpfe platzsparend in einander gesteckt werden können. Die Deckel an denen die Filter befestigt sind, sind bei ineinandergesteckten Filtern gleichachsig auf- bzw. hintereinander gestapelt. Das ermöglicht eine platzsparende Lagerung von Deckeln mit Filtern mit kleinem Packmaß.

In der Erfindung befindet sich das Filter innerhalb einer Mantelfläche einer Innenseite des Anschlussstutzens des Deckels. Anders ausgedrückt ist ein größter Querschnitt des Filters nicht größer als ein kleinster Innenquerschnitt des Anschlussstutzens des Deckels und steht nicht seitlich über eine axiale Projektion des kleinsten Innenquerschnitts des Anschlussstutzens über. Die Erfindung dient einem platzsparenden Stapeln erfindungsgemäßer Deckel mit ihren Filtern, weil Filter gestapelter Deckel in Anschlussstutzen jeweils nächster Deckel ragen können. Das Filter wirkt bei der Erfindung nicht als Abstandshalter, der einen Mindestabstand von Deckeln beim Stapeln erzwingt, sondern ein Abstand gestapelter Deckel kann kleiner als eine axiale Erstreckung des Filters sein. Eine ausreichend lange axiale Erstreckung des Filters ist für eine ausreichend große, durchströmbare Fläche des Filtermediums wichtig, insbesondere wenn ein Querschnitt des Filters klein bzw. nicht größer als ein kleinster Innenquerschnitt des Anschlussstutzens des Deckels ist. Das Filter kann in gleicher und/oder in entgegengesetzter Richtung wie der Anschlussstutzen vom Deckel abstehen, das Filter kann den Anschlussstutzen auch teilweise oder vollständig durchsetzen und/oder aus dem Anschlussstutzen vorstehen.

Eine Ausgestaltung der Erfindung sieht vor, dass der Deckel eine zum Anschlussstutzen koaxiale Kupplung aufweist, in oder auf die der Anschlussstutzen eines weiteren Deckels steckbar ist. Auch diese Ausgestaltung der Erfindung dient einem Stapeln mehrerer Deckel zu einer Lagerung und einem Transport mit kleinem Packmaß. Die Kupplung eines Deckels und der Anschlussstutzen eines anderen Deckels bilden einen Steckverbinder, mit dem zwei Deckel zum Stapeln zusammensteckbar sind. Es kann das Filter oder ein Abschnitt des Filters die Kupplung sein, die beim Stapeln von Deckeln beispielsweise klemmend oder auch geclipst im Anschlussstutzen eines anderen Deckels hält.

Ein Abstand zusammengesteckter, d. h. gestapelter Deckel ist vorzugsweise kleiner als eine axiale Erstreckung ihrer Filter.

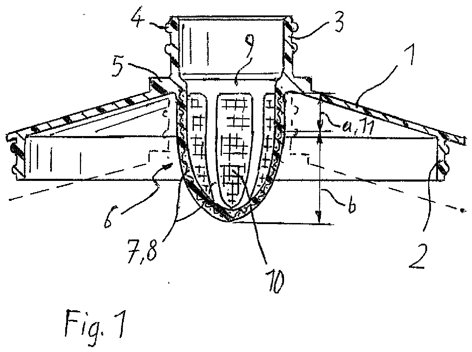

Die Erfindung wird nachfolgend anhand eines in der Zeichnung dargestellten Ausführungsbeispiels näher erläutert. Die einzige Figur zeigt einen Achsschnitt eines erfindungsgemäßen Deckels.

Der in der Zeichnung dargestellte, erfindungsgemäße Deckel 1 ist für einen becherförmigen, nicht dargestellten Flüssigkeitsbehälter für eine Druckluft- oder sonstige Spritzpistole vorgesehen, die ebenfalls nicht dargestellt ist. Insbesondere ist der Deckel 1 für einen Lackbehälter zum Lackieren mit der nicht gezeichneten Spritzpistole vorgesehen. Der Deckel 1 ist durch Spritzgießen aus Kunststoff hergestellt, d. h. er ist urgeformt. Er weist die Form eines flachen, d. h. stumpfwinkligen Hohlkegelstumpfs auf, von dessen Innenseite koaxial und randnah ein hohlzylindrischer Kragen 2 absteht, der zum Aufsetzen des Deckels 1 auf den nicht dargestellten Flüssigkeitsbehälter dient. Der Kragen 2 des Deckels 1 ist klemmend und fluiddicht in eine offene Seite des becherförmigen Flüssigkeitsbehälters steckbar.

Auf einer Außenseite des Deckels 1 steht koaxial ein zylinderrohrförmiger Anschlussstutzen 3 vom Deckel 1 ab, der ebenso wie der Kragen 2 einstückiger Bestandteil des Deckels 1 ist. Der Anschlussstutzen 3 dient zu einem lösbaren Verbinden mit der nicht dargestellten Spritzpistole, wobei die Verbindung sowohl den Deckel 1 zusammen mit dem Flüssigkeitsbehälter einschließlich enthaltener Flüssigkeit mechanisch an der Spritzpistole hält als auch der Flüssigkeitszuführung aus dem Flüssigkeitsbehälter in die Spritzpistole durch den Anschlussstutzen 3 des Deckels 1 dient. Die lösbare Verbindung des Anschlussstutzens 3 des Deckels 1 mit der Spritzpistole ist flüssigkeitsdicht, im Ausführungsbeispiels ist es eine Steckverbindung, wofür der Anschlussstutzen 3 außen umlaufende Wülste 4 aufweist, die einem gut klemmenden Halt der Steckverbindung des Anschlussstutzens 3 des Deckels 1 mit der Spritzpistole als auch der flüssigkeitsdichten Abdichtung dienen. Andere lösbare Verbindungen wie Schraub- oder Schnappverbindungen sind ebenso möglich. An einem Fuß des Anschlussstutzens 3, d. h. an einem Übergang vom Anschlussstutzen 3 in den hohlkegelstumpfförmigen Teil des Deckels 1 weist der Deckel 1 einen ringstufenförmigen Bund 5 als axiale Anlage an der nicht gezeichneten Spritzpistole auf.

Ebenfalls am Fuß des Anschlussstutzens 3, also am Übergang vom Anschlussstutzen 3 in den hohlkegelstumpfförmigen Teil des Deckels 1, und zwar an einer Innenseite des Anschlussstutzens 3 und des Deckels 1, weist der Deckel 1 ein Filter 6 auf, das auf der Innenseite des Deckels 1 koaxial vom Anschlussstutzen 3 absteht. Das Filter 6 ist rohrförmig, was ebenso als schlauchförmig aufgefasst werden kann, es weist ein offenes Ende und ein geschlossenes Ende auf, wobei das offene Ende dem Anschlussstutzen 3 zugewandt ist und in den Anschlussstutzen 3 mündet. Das Filter 6 befindet sich innerhalb einer zylindrischen Mantelfläche einer Innenseite des Anschlussstutzens 3, ein größter Querschnitt des Filters 6 ist nicht größer als ein Innendurchmesser oder allgemein als ein kleinster Innenquerschnitt des Anschlussstutzens 3. Das Filter 6 steht nicht nach außen über eine axiale Projektion eines kleinsten Innenquerschnitts des Anschlussstutzens 3 über. Das ermöglicht ein Aufstecken eines Anschlussstutzens 3 eines weiteren Deckels 1 zum Stapeln von Deckeln 1. Das Filter 6 kann beispielsweise hohlzylindrisch oder hohlkegelstumpfförmig sein. Im Ausführungsbeispiel weist das Filter 6 einen hohlzylindrischen Abschnitt a im Anschluss an den Anschlussstutzen 3 auf, der anschließend in die Form eines gestreckten Halbrotationsellipsoids b übergeht.

Abweichend vom Ausführungsbeispiel kann das Filter auch auf einer Außenseite des Deckels 1 vom Anschlussstutzen 3 abstehen (nicht dargestellt), also entgegengesetzt wie in der Zeichnung, und/oder das Filter kann den Anschlussstutzen 3 teilweise oder vollständig durchsetzen und ggf. aus dem Anschlussstutzen 3 vorstehen (nicht dargestellt). Wenn das Filter den Anschlussstutzen 3 durchsetzt besteht vorzugsweise ein ringförmiger Zwischenraum zwischen dem Anschlussstutzen 3 und dem Filter.

Das Filter 6 weist ein Filtergerüst 7 mit über einen Umfang verteilt angeordneten Rippen 8 und einem umlaufenden Ring 9 am Fuß des Anschlussstutzens 3 in dessen Innenseite auf. Die Rippen 8 befinden sich in Axialebenen des Deckels 1 und verlaufen im hohlzylindrischen Abschnitt a des Filters 6 achsparallel und gerade und gehen anschließend im halbrotationsellipsoiden Abschnitt b des Filters 6 in halbellipsenförmige Bögen über, die sich an einem dem Anschlussstutzen 3 abgewandten, geschlossenen Ende des Filters 6 kreuzen. Im hohlzylindrischen Abschnitt a des Filters 6 weisen Außenseiten der dort gerade und achsparallel verlaufenden Rippen 8 des Filtergerüsts 7 des Filters 6 einen Abstand voneinander auf, der einem Innendurchmesser des Anschlussstutzens 3 entspricht.

Am Fuß des Anschlussstutzens 3 geht das Filtergerüst 7 des Filters 6 einstückig in den Anschlussstutzen 3 bzw. den Deckel 1 über. Das Filtergerüst 7 ist in einem Arbeitsschritt zusammen mit dem Deckel 1 durch Spritzgießen aus Kunststoff hergestellt.

Das Filter 6 weist ein Filtergewebe als Filtermedium 10 auf, das die Form des Filters 6 aufweist. Im Ausführungsbeispiel ist das Filtermedium 10 in einem an einem offenen Ende beginnenden Abschnitt hohlzylindrisch und geht in einen Abschnitt über, der die Form eines gestreckten Halbrotationsellipsoids aufweist. Das Filtermedium 10 ist in den Kunststoff des Filtergerüsts 7, also in die Rippen 8 und den Ring 9 eingebettet. Bereiche des Filtermediums 10, die in die Rippen 8 und an einem Rand an einem offenen Ende des Filtermediums 10 bzw. des Filters 6 in den Ring 9 des Filtergerüsts 7 eingebettet sind, können auch als Befestigungsbereiche des Filtermediums 10 aufgefasst werden. Bei der Herstellung des Deckels 1 wird das Filtermedium 10 in ein nicht gezeichnetes Spritzgießwerkzeug eingelegt, das anschließend geschlossen und in das danach der den Deckel 1 einschließlich des Kragens 2, des Anschlussstutzens 3 und des Filtergerüsts 7 bildende Kunststoff eingespritzt wird. Im Bereich des Rings 9 und der Rippen 8 des Filtergerüsts 7 umfließt und durchfließt plastifizierter Kunststoff das Filtermedium 10, so dass das Filtermedium 10 in diesen als Befestigungsbereiche bezeichnete Bereichen in den Kunststoff eingebettet ist. Der Kunststoff bildet eine Art Matrix für die eingebetteten Befestigungsbereiche des Filtermediums 10 vergleichbar einem Faserverbundwerkstoff.

Das Filter 6 einschließlich des Filtermediums 10 kann auch einstückig und gemeinsam mit dem Deckel 1 spritzgegossen sein, d. h. der gesamte Deckel 1 mit dem Anschlussstutzen 3 und dem Filter 6 einschließlich des Filtermediums 10 ist ein einziges Spriztgießteil.

Der hohlzylindrische Abschnitt a des Filters 6 bzw. die im hohlzylindrischen Abschnitt a des Filters 6 in Axialebenen des Deckels 1 gerade und achsparallel verlaufenden Rippen 8 des Filtergerüsts 7 bilden eine zum Anschlussstutzen 3 koaxiale Kupplung 11, auf die ein Anschlussstutzen 3 eines weiteren Deckels 1 steckbar ist, wie es in der Zeichnung mit Strichlinien angedeutet ist. Das Filter 6 bzw. sein hohlzylindrischer Abschnitt a, der die Kupplung 11 bildet, hält klemmend im Anschlussstutzen 3 des weiteren Deckels 1 hält. Auf diese Weise lassen sich Deckel 1 zur Lagerung und zum Transport stapeln. Die Filter 6 gelangen beim Zusammenstecken und Stapeln der Deckel 1 aufgrund ihrer sich in einer Richtung verjüngenden Hohlform ineinander, so dass ein Abstand der Deckel 1 beim Stapeln nicht durch eine Länge bzw. axiale Erstreckung des Filters 6 vorgegeben ist. Das Filter 6 kann dadurch axial lang ausgeführt sein um eine ausreichend große Filterfläche zu gewährleisten. Im Ausführungsbeispiel wird ein Abstand der Deckel 1 beim Stapeln von einer axialen Höhe des Anschlussstutzens 3 bestimmt.

Das Filter 6 filtert Flüssigkeiten, die aus dem nicht gezeichneten Flüssigkeitsbehälter, auf das der Deckel 1 aufgesetzt ist, durch den Anschlussstutzen 3 ausströmt.

## Patentansprüche

1. Deckel für einen Flüssigkeitsbehälter für eine Spritzpistole, wobei der Deckel (1) einen rohrförmigen Anschlussstutzen (3) zum lösbaren Verbinden mit der Spritzpistole aufweist und aus Kunststoff urgeformt ist und wobei der Deckel (1) ein Filter (6) aufweist, **dadurch gekennzeichnet, dass** sich das Filter (6) innerhalb einer Mantelfläche einer Innenseite des Anschlussstutzens (3) befindet, so dass Deckel (1) gestapelt werden können, wobei ein Filter (6) eines gestapelten Deckels (1) in den Anschlussstutzen (3) eines nächsten gestapelten Deckels (1) ragt, und dass ein Filtermedium (10) zur Befestigung am Deckel (1) an Befestigungsbereichen durch das Urformen des Kunststoffs in den Deckel (1) eingebettet oder einstückiger Bestandteil des urgeformten Deckels (1) ist.

2. Deckel nach Anspruch 1, **dadurch gekennzeichnet, dass** der Deckel (1) ein mit dem Deckel (1) einstückiges Filtergerüst (7) aufweist, in das die Befestigungsbereiche des Filtermediums (10) eingebettet sind.

3. Deckel nach Anspruch 1 oder 2, **dadurch gekennzeichnet, dass** das Filter (6) rohrförmig ist.

4. Deckel nach Anspruch 3, **dadurch gekennzeichnet, dass** sich das Filter (6) von einem offenen Ende weg verjüngt, so dass mehrere Filter (6) ineinandergesteckt werden können.

5. Deckel nach einem der vorhergehenden Ansprüche, **dadurch gekennzeichnet, dass** der Deckel (1) eine zum Anschlussstutzen (3) koaxiale Kupplung (11) aufweist, in die ein Anschlussstutzen (3) eines weiteren Deckels (1) steckbar ist, so dass mehrere Deckel (1) koaxial zu einem Stapel zusammensteckbar sind.

6. Deckel nach Anspruch 5, **dadurch gekennzeichnet, dass** ein Abstand zusammengesteckter Deckel (1) kleiner als eine axiale Erstreckung des Filters (6) ist.

## Claims

1. Cover for a liquid container for a spray gun, the cover (1) having a tubular connecting piece (3) for detachably connecting to the spray gun and being moulded from plastics material and the cover (1) having a filter (6), **characterised in that** the filter (6) is located inside a lateral face of an inner face of the connecting piece (3), so that covers (1) can be stacked, with a filter (6) of a stacked cover (1) protruding into the connecting piece (3) of a next stacked cover (1), and **in that** a filter medium (10) for fastening to the cover (1) is embedded in the cover (1) at fastening regions by moulding the plastics material or is an integral component of the moulded cover (1).

2. Cover according to claim 1, **characterised in that** the cover (1) has a filter frame (7) which is integral with the cover (1), and in which frame the fastening regions of the filter medium (10) are embedded.

3. Cover according to either claim 1 or claim 2, **characterised in that** the filter (6) is tubular.

4. Cover according to claim 3, **characterised in that** the filter (6) tapers away from an open end, so that a plurality of filters (6) can be plugged into one another.

5. Cover according to any of the preceding claims, **characterised in that** the cover (1) has a coupling (11) which is coaxial with the connecting piece (3) and into which a connecting piece (3) of a further cover (1) can be plugged, so that a plurality of covers (1) can be plugged together coaxially to form a stack.

6. Cover according to claim 5, **characterised in that** a distance between covers (1) which are plugged together is smaller than an axial extension of the filter (6).

## Revendications

1. Couvercle destiné à un récipient de liquide dédié à un pistolet de pulvérisation, sachant que ledit couvercle (1) comporte un embout tubulaire de raccordement (3) en vue de la jonction libérable avec ledit pistolet de pulvérisation, et est venu originellement de moulage en matière plastique, ledit couvercle (1) étant muni d'un filtre (6), **caractérisé par le fait que** le filtre (6) se trouve à l'intérieur d'une surface d'enveloppe d'une face interne de l'embout de raccordement (3), de façon telle que des couvercles (1) puissent être empilés, sachant qu'un filtre (6) d'un couvercle empilé (1) s'engage dans l'embout de raccordement (3) d'un couvercle empilé (1) placé en succession ; et **par le fait qu'**un agent filtrant (10) est intégré dans le couvercle (1) sous l'effet du moulage originel de la matière plastique, en vue de la fixation audit couvercle (1) au niveau de zones de fixation, ou bien fait partie intégrante dudit couvercle (1) venu originellement de moulage.

2. Couvercle selon la revendication 1, **caractérisé par le fait que** ledit couvercle (1) est pourvu d'une carcasse (7) porte-filtre, qui fait corps avec ledit couvercle (1) et dans laquelle les zones de fixation de l'agent filtrant (10) sont intégrées.

3. Couvercle selon la revendication 1 ou 2, **caractérisé par le fait que** le filtre (6) est de forme tubulaire.

4. Couvercle selon la revendication 3, **caractérisé par le fait que** le filtre (6) s'amenuise à partir d'une extrémité ouverte, si bien que plusieurs filtres (6) peuvent être emboîtés les uns dans les autres.

5. Couvercle selon l'une des revendications précédentes, **caractérisé par le fait que** ledit couvercle (1) est doté d'un accouplement (11) coaxial à l'embout de raccordement (3), dans lequel un embout de raccordement (3) d'un autre couvercle (1) peut être emboîté de telle sorte que plusieurs couvercles (1) puissent être rassemblés coaxialement par emboîtement, pour constituer une pile.

6. Couvercle selon la revendication 5, **caractérisé par le fait qu'**un espacement, entre des couvercles (1) rassemblés par emboîtement, est plus petit qu'une étendue axiale du filtre (6).
